# EUROPEAN PATENT APPLICATION

(11) **EP 4 790 098 A1**
(43) Date of publication of application: **12.08.2026**
(21) Application number: 24874481.5
(22) Date of filing: 19.09.2024
(51) Int. Cl.: C08L 67/04, B32B 27/36, C08K 3/34, C08K 5/20, C08L 101/16

(54) **RESIN COMPOSITION FOR T-DIE EXTRUSION MOLDING**

(30) Priority: 06.10.2023 JP 2023174479
(71) Applicant: Kaneka Corporation, Osaka-shi, Osaka 530-8288 (JP)
(72) Inventor: OKADA, Yasunori, Osaka, 566-0072 (JP); ENOMOTO, Yuta, Osaka, 566-0072 (JP); KUBOTA, Tomofumi, Osaka, 566-0072 (JP)
(74) Representative: Vossius & Partner Patentanwälte Rechtsanwälte mbB
(86) International application number: PCT/JP2024/033426
(87) International publication number: WO 2025/074872

(57) **Abstract**

A resin composition for T-die extrusion molding contains: 100 parts by weight of a poly(3-hydroxyalkanoate) resin (A); 0.3 to 3 parts by weight of a layered clay mineral (B) having a mean particle diameter D50 of 1 to 5 µm and a specific surface area, as determined by BET method, of 10 to 40 m²/g; and 0.3 to 3 parts by weight of a fatty acid amide compound (C). The resin composition has a melt viscosity, as measured at a temperature of 175 °C and a shear rate of 122 s⁻¹, of 300 to 1000 Pa·s.

## Description

### Technical Field

The present invention relates to a resin composition for T-die extrusion molding, a T-die extrusion-molded film, a laminate, a molded article, a film production method, and a laminate production method.

### Background Art

In recent years, environmental problems associated with waste plastics have become an issue of great concern. In particular, waste plastics have caused serious marine pollution, and there is a demand for the widespread use of biodegradable plastics which are degradable in the natural environment.

Various such biodegradable plastics are known. Among them, poly(3-hydroxyalkanoate) resins (hereinafter also referred to as "P3HA resins") are thermoplastic polyesters that are produced and accumulated as energy storage substances in the cells of many types of microorganisms. These resins are biodegradable in seawater as well as in soil, and are therefore attracting attention as materials that can be a solution to the problems mentioned above.

A laminate produced by laminating a biodegradable substrate such as paper with a P3HA resin is very promising in terms of environmental protection because both the resin and the substrate have high biodegradability. Choices of lamination methods include: a method consisting of introducing a P3HA resin into an extruder equipped with a T-die, processing the P3HA resin into a film by the extruder, and laminating a substrate with the film; and an extrusion coating method that does not involve film formation but in which a molten PHA resin extruded through a T-die using equipment similar to the T-die-equipped extruder is placed onto a separately fed substrate to laminate the substrate directly with the PHA resin.

Patent Literature 1, which is not directed to T-die extrusion molding, describes a resin composition for injection molding that contains 100 parts by weight of a poly(3-hydroxyalkanoate) resin having a specific monomer makeup and 5 to 45 parts by weight of a layered clay mineral.

### Citation List

### Patent Literature

PTL 1: WO 2022/065182 A1

### Summary of Invention

### Technical Problem

In general, P3HA resins crystalize slowly. Thus, a molten P3HA resin extruded through a T-die tends to stick to a cooling roll with which the resin comes into contact immediately after extrusion. Accordingly, the resin is exposed to a strong force when separated from the cooling roll. As a result, the surface of the resin film or layer obtained by the separation has microscopic irregularities and whitish mottling or is wrinkled, so that the resin film or layer is likely to have a poor appearance.

Nevertheless, it has been found that some efforts to improve separability from the cooling roll increase the severity of a phenomenon called "neck-in," in which the width of the resin film or layer (the dimension in a direction perpendicular to the flow direction) becomes smaller than the width of the opening of the T-die. In particular, when a P3HA resin having a relatively low molecular weight is used to improve separability, the melt viscosity decreases, and the amount of neck-in markedly increases. An increase in the amount of neck-in may result in a failure to achieve a desired width of the film or layer, or may lead to the film or layer having an unnecessarily thick end portion and deteriorated thickness uniformity.

In view of the above circumstances, the present invention aims to provide a resin composition for T-die extrusion molding that contains a P3HA resin, the resin composition being adapted to improve separability from a cooling roll after extrusion through a T-die and reduce the amount of neck-in.

### Solution to Problem

As a result of intensive studies with the goal of solving the above problem, the present inventors have found that when a resin composition is prepared by blending a P3HA resin with a given amount of a layered clay mineral having specific features and a given amount of a fatty acid amide compound, and the melt viscosity of the resin composition under given conditions is controlled within a specific range, separability from a cooling roll after extrusion through a T-die can be improved, and the amount of neck-in can be reduced. Based on this finding, the inventors have completed the present invention.

Specifically, the present invention relates to a resin composition for T-die extrusion molding, containing:
100 parts by weight of a poly(3-hydroxyalkanoate) resin (A);
0.3 to 3 parts by weight of a layered clay mineral (B) having a mean particle diameter D50, as determined by laser diffractometry, of 1 to 5 µm and a specific surface area, as determined by BET method, of 10 to 40 m²/g; and
0.3 to 3 parts by weight of a fatty acid amide compound (C), wherein
the resin composition has a melt viscosity, as measured at a temperature of 175 °C and a shear rate of 122 s⁻¹, of 300 to 1000 Pa·s.

The present invention also relates to a T-die extrusion-molded film containing the resin composition for T-die extrusion molding.

The present invention also relates to a laminate including: a T-die extrusion-molded resin layer containing the resin composition for T-die extrusion molding; and a substrate layer.

The present invention also relates to a molded article including the laminate.

The present invention also relates to a method for producing a film, the method including the step of subjecting the resin composition for T-die extrusion molding to melt extrusion molding using a T-die.

The present invention also relates to a method for producing the laminate, the method including the step of forming the resin layer on at least one side of the substrate layer by extrusion coating using a T-die.

The present invention also relates to a method for producing the laminate, the method including the steps of:
molding the resin composition for T-die extrusion molding into a film by subjecting the resin composition to melt extrusion molding using a T-die; and
placing the film on at least one side of the substrate layer and forming the film into the resin layer by dry lamination, non-solvent lamination, or thermal lamination.

### Advantageous Effects of Invention

The present invention can provide a resin composition for T-die extrusion molding that contains a P3HA resin, the resin composition being adapted to improve separability from a cooling roll after extrusion through a T-die and reduce the amount of neck-in.

According to the present invention, a film or laminate containing a P3HA resin can be produced using T-die extrusion with a high yield and high productivity. Furthermore, production over a long period of time can be stably carried out.

The resulting film or laminate exhibits good separability from a cooling roll and thus has a good surface condition.

### Description of Embodiments

Hereinafter, an embodiment of the present invention will be described. The present invention is not limited to the embodiment described below.

A resin composition according to the present embodiment is a resin composition containing a poly(3-hydroxyalkanoate) resin (A) as an essential component.

### [Poly(3-Hydroxyalkanoate) Resin (A)]

The poly(3-hydroxyalkanoate) resin (A) (hereinafter also referred to as the "P3HA resin (A)") is a biodegradable aliphatic polyester (a polyester containing no aromatic ring). Specifically, the P3HA resin (A) is a polyhydroxyalkanoate containing 3-hydroxyalkanoate repeating units represented by [-CHR-CH₂-CO-O-] (wherein R is an alkyl group represented by CₙH₂ₙ₊₁ and n is an integer from 1 to 15). In particular, the P3HA resin (A) preferably contains 50 mol% or more, more preferably 70 mol% or more, of the repeating units based on the total monomer repeating units (100 mol%).

Among P3HA resins, a poly(3-hydroxybutyrate) resin (hereinafter also referred to as a "P3HB resin") can be preferably used because it is readily available and easily processable.

The P3HB resin is an aliphatic polyester resin that can be microbially produced and that contains 3-hydroxybutyrate (hereinafter also referred to as "3HB") units as repeating units. The P3HB resin may be a poly(3-hydroxybutyrate) containing only 3HB units as repeating units or may be a copolymer of 3-hydroxybutyrate and another hydroxyalkanoate. The form of copolymerization is not limited to a particular type, and may be random copolymerization, alternating copolymerization, block copolymerization, or graft copolymerization. Microbially produced copolymers are usually random copolymers.

Specific examples of the P3HA resin (A) include poly(3-hydroxybutyrate), poly(3-hydroxybutyrate-co-3-hydroxyhexanoate) (hereinafter also referred to as "P3HB3HH"), poly(3-hydroxybutyrate-co-3-hydroxyvalerate) (hereinafter also referred to as "P3HB3HV"), poly(3-hydroxybutyrate-co-4-hydroxybutyrate), poly(3-hydroxybutyrate-co-3-hydroxyoctanoate), poly(3-hydroxybutyrate-co-3-hydroxyoctadecanoate), poly(3-hydroxybutyrate-co-3-hydroxydecanoate), and poly(3-hydroxybutyrate-co-3-hydroxyvalerate-co-3-hydroxyhexanoate). Among these, poly(3-hydroxybutyrate), poly(3-hydroxybutyrate-co-3-hydroxyhexanoate), poly(3-hydroxybutyrate-co-3-hydroxyvalerate), and poly(3-hydroxybutyrate-co-4-hydroxybutyrate) are preferred because they are easy to produce industrially.

P3HB3HH is particularly preferred for the following reasons: its melting point and crystallinity can be changed by varying the proportions of the repeating units, and thus its physical properties such as Young's modulus and heat resistance can be adjusted and controlled to levels intermediate between those of polypropylene and polyethylene; and P3HB3HH is a plastic that is easy to produce industrially and has useful physical properties. P3HB3HH is preferred also in that it can have a low melting point and be moldable at low temperatures.

Examples of commercially available P3HB3HH include "Kaneka Biodegradable Polymer Green Planet^{™}" of Kaneka Corporation.

As for P3HB3HV mentioned above, its properties such as melting point and Young's modulus vary depending on the ratio between the 3-hydroxybutyrate component and the 3-hydroxyvalerate component. However, the crystallinity of P3HB3HV is as high as 50% or more because the two components are co-crystalized. Thus, P3HB3HV cannot offer sufficient improvement in terms of brittleness although it is more flexible than poly(3-hydroxybutyrate).

When the P3HA resin (A) contains a copolymer of 3-hydroxybutyrate and another hydroxyalkanoate, the ratio between the monomer units (3-hydroxybutyrate units/other hydroxyalkanoate units) in the copolymer is preferably from 90/10 to 99/1 (mol/mol) in terms of the balance between mechanical strength properties such as flexibility and solidification speed. The ratio is more preferably from 92/8 to 98/2 (mol/mol) and even more preferably from 94/6 to 97/3 (mol/mol).

The copolymer of 3-hydroxybutyrate and another hydroxyalkanoate, in which the ratio between 3-hydroxybutyrate units and other hydroxyalkanoate units is from 90/10 to 99/1 (mol/mol), preferably constitutes from 50 to 100 wt% of the total P3HA resin (A). The proportion of the copolymer is more preferably from 70 to 100 wt%, even more preferably from 80 to 100 wt%, still more preferably from 90 to 100 wt%, and particularly preferably from 95 to 100 wt%.

The molar ratio between different monomer units in total monomer units constituting a copolymer can be determined by a method known to those skilled in the art, such as the method described in paragraph [0047] of WO 2013/147139 A1.

The weight-average molecular weight (hereinafter also referred to as "Mw") of the P3HA resin (A) is not limited to a particular range. In order for the resin composition according to the present embodiment to satisfy the requirements described later for melt viscosity and in order both to improve separability from a cooling roll and to reduce the amount of neck-in, the weight-average molecular weight is preferably from 25 × 10⁴ to 50 × 10⁴, more preferably from 30 × 10⁴ to 45 × 10⁴, and particularly preferably from 35 × 10⁴ to 40 × 10⁴. When the weight-average molecular weight falls within such a range, the resin composition according to the present embodiment has sufficient mechanical properties, and it becomes easier to ensure both improvement in separability from a cooling roll and reduction in the amount of neck-in.

The weight-average molecular weight of the P3HA resin (A) can be determined as a polystyrene-equivalent molecular weight measured by gel permeation chromatography (GPC; "Shodex GPC-101" manufactured by Showa Denko K.K.) using a polystyrene gel ("K-804" manufactured by Showa Denko K.K.) as a column and chloroform as a mobile phase.

The microorganism used to produce the P3HA resin is not limited to a particular type and may be any microorganism having a P3HA resin-producing ability. The first example of P3HB-producing bacteria is *Bacillus megaterium* discovered in 1925, and other known examples include naturally occurring microorganisms such as *Cupriavidus necator* (formerly classified as *Alcaligenes eutrophus* or *Ralstonia eutropha*) and *Alcaligenes latus.* These microorganisms are known to accumulate P3HB in their cells.

Known examples of bacteria that produce copolymers of hydroxybutyrate with other hydroxyalkanoates include *Aeromonas caviae* which is a P3HB3HV- and P3HB3HH-producing bacterium and *Alcaligenes eutrophus* which is a P3HB4HB-producing bacterium. In particular, in order to increase P3HB3HH productivity, *Alcaligenes eutrophus* AC32 (FERM BP-6038; see T. Fukui, Y. Doi, J. Bacteriol., 179, pp. 4821-4830 (1997)) incorporating a P3HA synthase gene is more preferred. Such a microorganism is cultured under suitable conditions to allow the microorganism to accumulate P3HB3HH in its cells, and the microbial cells accumulating P3HB3HH are used. Instead of the above microorganisms, a genetically modified microorganism incorporating any suitable P3HA resin synthesis-related gene may be used depending on the P3HA resin to be produced. The culture conditions including the type of the substrate may be optimized depending on the P3HA resin to be produced.

Alternatively, P3HB3HH can be produced, for example, by the method described in WO 2010/013483 A1.

The resin composition according to the present embodiment may contain only one resin as the P3HA resin (A) or may contain a combination of two or more resins. When two or more resins (A) are combined, the two or more resins used in combination may differ in the types of the constituent monomers or in the proportions of the constituent monomers.

When at least two P3HA resins are used in combination, it is preferable to use a combination of at least one high-crystallinity P3HA resin and at least one low-crystallinity P3HA resin. In general, high-crystallinity P3HA resins are excellent in processability but have low mechanical strength, while low-crystallinity P3HA resins have excellent mechanical properties although they are inferior in processability. The use of high-crystallinity and low-crystallinity P3HA resins in combination enables the formation of a P3HA resin composition excellent in both processability and mechanical properties.

When the high-crystallinity P3HA resin contains 3-hydroxybutyrate units, the proportion of the 3-hydroxybutyrate units in the high-crystallinity P3HA resin is preferably higher than the average proportion of 3-hydroxybutyrate units in the total P3HA resin (A). When the high-crystallinity P3HA resin contains 3-hydroxybutyrate units and other hydroxyalkanoate units, the ratio between the monomer units (3-hydroxybutyrate units/other hydroxyalkanoate units) in the high-crystallinity resin is preferably from 90/10 to 99/1 (mol/mol), more preferably from 92/8 to 98/2 (mol/mol), and even more preferably from 94/6 to 97/3 (mol/mol).

Any of the P3HA resins mentioned above may be used as the high-crystallinity P3HA resin. Poly(3-hydroxybutyrate-co-3-hydroxyhexanoate) or poly(3-hydroxybutyrate-co-4-hydroxybutyrate) is preferred.

The proportion of 3-hydroxybutyrate units in the low-crystallinity P3HA resin is preferably lower than the average proportion of 3-hydroxybutyrate units in the total P3HA resin (A). When the low-crystallinity P3HA resin contains 3-hydroxybutyrate units and other hydroxyalkanoate units, the ratio between the monomer units (3-hydroxybutyrate units/other hydroxyalkanoate units) in the low-crystallinity resin is preferably from 80/20 to 0/100 (mol/mol), more preferably from 76/24 to 1/99 (mol/mol), even more preferably from 76/24 to 50/50 (mol/mol), and particularly preferably from 74/26 to 70/30 (mol/mol).

Any of the P3HA resins mentioned above may be used as the low-crystallinity P3HA resin. Poly(3-hydroxybutyrate-co-3-hydroxyhexanoate) or poly(3-hydroxybutyrate-co-4-hydroxybutyrate) is preferred.

When a high-crystallinity P3HA resin and a low-crystallinity P3HA resin are used in combination, the proportion of the low-crystallinity P3HA resin in the total amount of the two resins is preferably from 20 to 50 wt%, more preferably from 20 to 40 wt%, and particularly preferably from 25 to 35 wt%.

The resin composition according to the present embodiment may contain one resin or two or more resins other than the P3HA resin (A) insofar as the effect of the invention is achieved. Such additional resins are preferably biodegradable resins, and examples include: aliphatic polyester resins such as polybutylene succinate, polycaprolactone, and polylactic acid; aliphatic-aromatic polyester resins such as polybutylene adipate terephthalate, polybutylene sebacate terephthalate, and polybutylene azelate terephthalate; and polybutylene succinate adipate resins such as polybutylene succinate adipate and copolymers of polybutylene succinate adipate with lactic acid, terephthalic acid, malic acid, or sebacic acid.

The amount of the additional resin to be added is preferably 30 parts by weight or less per 100 parts by weight of the P3HA resin (A) in order to ensure the biodegradability of the present resin composition. The amount of the additional resin may be 20 parts by weight or less, 10 parts by weight or less, or 5 parts by weight or less. The lower limit of the amount of the additional resin is not limited to a particular value and may be 0 parts by weight.

### (Layered Clay Mineral (B))

The resin composition according to the present embodiment further contains a layered clay mineral (B). This makes it possible to improve separability from a cooling roll after extrusion through a T-die and reduce the amount of neck-in.

The term "layered clay mineral" refers to a mineral containing a layered silicate as a main component.

The layered clay mineral (B) is not limited to a particular material, and any known layered clay mineral may be used. To reliably achieve the neck-in-reducing effect, at least one layered clay mineral selected from the group consisting of smectite, mica, talc, pyrophyllite, vermiculite, chlorite, kaolinite, and serpentine is preferred. In terms of utility, mica, talc, and kaolinite are preferred. Particularly preferred is talc.

Examples of the mica include wet-ground mica and dry-ground mica.

Examples of the talc include general-purpose talc and surface-treated talc.

Examples of the kaolinite include dry kaolin, calcined kaolin, and wet kaolin.

The layered clay mineral (B) used is a layered clay mineral that has a mean particle diameter D50, as determined by laser diffractometry, of 1 to 5 µm. This feature makes it possible to ensure both improvement in separability from a cooling roll and reduction in the amount of neck-in. Furthermore, a resin film or layer formed from the resin composition according to the present embodiment can have good mechanical properties. If a layered clay mineral that has a mean particle diameter D50 of greater than 5 µm is used, separability from a cooling roll is insufficient although the amount of neck-in can be reduced. The mean particle diameter D50 is preferably from 1.2 to 4 µm and more preferably from 1.5 to 3 µm. In particular, in the above-described aspect in which high-crystallinity and low-crystallinity P3HA resins are used in combination, separability from a cooling roll can be further improved when the mean particle diameter D50 of the layered clay mineral (B) is 2 µm or more.

The mean particle diameter D50 of the layered clay mineral (B) can be measured as a median diameter (D50) using a laser diffraction/scattering particle size distribution analyzer such as "Microtrac MT3100II" manufactured by Nikkiso Co., Ltd.

In order to achieve the function as a nucleating agent for the P3HA resin (A), the layered clay mineral (B) used has a specific surface area of 10 to 40 m²/g. The specific surface area is more preferably from 12 to 38 m²/g and even more preferably from 15 to 35 m²/g. The specific surface area can be measured by BET method.

The amount of the layered clay mineral (B) is from 0.3 to 3 parts by weight per 100 parts by weight of the P3HA resin (A). By incorporating the layered clay mineral in such an amount, it is possible to ensure both improvement in separability from a cooling roll after T-die extrusion and reduction in the amount of neck-in. Furthermore, the resulting resin film or layer can have good mechanical properties. If the amount of the layered clay mineral (B) is less than 0.3 parts by weight, the neck-in-reducing effect tends to be insufficient. If the amount of the layered clay mineral (B) is more than 3 parts by weight, it disperses poorly, so that separability from a cooling roll tends to decline. The amount of the layered clay mineral (B) is preferably from 0.5 to 2.5 parts by weight and more preferably from 1 to 2 parts by weight.

### (Aliphatic Amide Compound (C))

Aliphatic amide compounds are a class of additives that are conventionally known as lubricants to be added to resins.

Examples of the aliphatic amide compound (C) include, but are not limited to: saturated or unsaturated fatty acid amides such as lauramide, myristamide, palmitamide, stearamide, behenamide, oleamide, and erucamide; and alkylene fatty acid amides such as methylene bis(stearamide) and methylene bis(stearamide). Among these, behenamide and erucamide are preferred in terms of improvement in separability from a cooling roll. One aliphatic amide compound may be used alone, or two or more aliphatic amide compounds may be used in combination.

The amount of the aliphatic amide compound (C) is from 0.3 to 3 parts by weight per 100 parts by weight of the P3HA resin (A). By adjusting the amount of the aliphatic amide compound (C) to 0.3 parts by weight or more, the effect of incorporating this component in improving separability from a cooling roll can be achieved. However, if the amount of the aliphatic amide compound (C) is more than 3 parts by weight, this component may bleed out and stick to the surface of equipment such as a cooling roll, thereby making continuous processing over a long period of time difficult. The amount of the aliphatic amide compound (C) is preferably from 0.5 to 2.5 parts by weight and more preferably from 1 to 2 parts by weight.

### (Nucleating Agent)

The resin composition according to the present embodiment may contain a nucleating agent (hereinafter also referred to as an "additional nucleating agent") other than layered clay minerals and aliphatic amide compounds. Examples of such additional nucleating agents include: sugar alcohols such as pentaerythritol, galactitol, and mannitol; orotic acid; aspartame; cyanuric acid; glycine; zinc phenylphosphonate; and boron nitride. One nucleating agent may be used alone, or two or more nucleating agents may be used. The proportions of the nucleating agents used can be adjusted as appropriate depending on the intended purpose.

When an additional nucleating agent is used, the amount of the additional nucleating agent is not limited to a particular range, but is preferably from 0.1 to 5 parts by weight and more preferably from 0.5 to 3 parts by weight per 100 parts by weight of the P3HA resin (A).

However, the resin composition according to the present embodiment may be substantially free of any additional nucleating agents (in particular, sugar alcohols or pentaerythritol). The expression "substantially free of any additional nucleating agents" means that the amount of additional nucleating agents is less than 0.1 parts by weight per 100 parts by weight of the P3HA resin (A). The amount of additional nucleating agents may be less than 0.01 parts by weight. In an aspect in which the resin composition is substantially free of any additional nucleating agents, bleed-out of an additional nucleating agent, and concomitant soiling of the surface of a cooling roll, can be avoided. Since the resin composition according to the present embodiment contains the layered clay mineral (B) and the fatty acid amide compound (C), the resin composition can exhibit good separability from a cooling roll even when it is substantially free of any additional nucleating agents.

The resin composition according to the present embodiment may contain additives that are commonly used in the art in addition to the layered clay mineral (B) and the fatty acid amide compound (C), insofar as the effect of the invention is achieved. Examples of such additives include: inorganic fillers such as calcium carbonate, silica, titanium oxide, and alumina; organic fillers such as chaff, wood powder, waste paper (e.g., newspaper), various kinds of starch, and cellulose; colorants such as pigments and dyes; odor absorbers such as activated carbon and zeolite; flavors such as vanillin and dextrin; and various other additives such as plasticizers, oxidation inhibitors, antioxidants, weathering resistance improvers, ultraviolet absorbers, lubricants, mold release agents, water-repellent agents, anti-microbial agents, and slidability improvers. The resin composition may contain only one additive or may contain two or more additives. The amounts of such additives can be set by those skilled in the art as appropriate depending on the intended purpose.

The proportion of the P3HA resin (A) in the resin composition according to the present embodiment is not limited to a particular range, and may be 50 wt% or more based on the total amount of the resin composition. The proportion of the P3HA resin (A) may be 60 wt% or more, 70 wt% or more, 80 wt% or more, 90 wt% or more, or 95 wt% or more.

The resin composition according to the present embodiment exhibits a melt viscosity, as measured at a temperature of 175 °C and a shear rate of 122 s⁻¹, of 300 to 1000 Pa·s. When the melt viscosity falls within this range, shear heating in the extruder is reduced, and the molten resin can easily retain crystal nuclei required to accelerate crystallization of the molten resin upon contact with a cooling roll. If the melt viscosity is less than 300 Pa·s, separability from the cooling roll may be insufficient, or the neck-in-reducing effect may be unsatisfactory. If the melt viscosity is more than 1000 Pa·s, separability from the cooling roll may be insufficient, so that continuous production may become difficult. The melt viscosity is preferably from 350 to 900 Pa·s, more preferably from 400 to 800 Pa·s, and even more preferably from 500 to 700 Pa·s.

The melt viscosity exhibited by the resin composition according to the present embodiment can be controlled by adjusting parameters such as the monomer proportions of the P3HA resin (A), the weight-average molecular weight of the P3HA resin (A), and the amounts of components other than the P3HA resin (A).

The resin composition according to the present embodiment is intended for use in T-die extrusion molding. Specifically, the resin composition can be used to produce a film by melt extrusion molding using a T-die or to produce a laminate by extruding the molten resin composition through a T-die so as to laminate a substrate layer directly with the extruded resin composition. The details of such production will be described later.

### [Laminate]

A laminate according to the present embodiment includes a substrate layer and a resin layer containing the resin composition described above, and the resin layer is located on at least one side of the substrate layer. Since the resin layer has a good surface condition, the laminate is useful for various applications.

In the laminate, the resin layer may be located on only one side of the substrate layer or on both sides of the substrate layer. The resin layer may be located over the substrate layer with another layer interposed between the resin layer and the substrate layer, or may be located directly on the substrate layer without any other layer interposed between the resin layer and the substrate layer. Another layer may be further provided on the resin layer.

### (Substrate Layer)

The laminate includes a substrate layer. The substrate layer of the laminate is not limited to a particular type and may be any layer on which the resin layer can be formed. Preferably, the substrate layer is a biodegradable layer. In this case, the entire laminate, including the resin layer, has biodegradability, and thus becomes more useful as a material for addressing the problem of marine pollution.

Examples of biodegradable substrate layers include, but are not limited to, a layer of paper (whose main component is cellulose), a layer of cellophane, a layer of cellulose ester, a layer of polyvinyl alcohol, a layer of polyamino acid, a layer of polyglycolic acid, a layer of pullulan, and any of these layers on which an inorganic substance such as aluminum or silica has been vapor-deposited. Among these, a layer of paper is preferred because it has high heat resistance and is inexpensive. The paper is not limited to a particular type, and examples include cup paper, kraft paper, high-quality paper, coated paper, tissue paper, glassine paper, and paperboard. The type of the paper may be selected as appropriate depending on the intended purpose of the laminate. If necessary, additives such as a waterproofing agent, a water-repellent agent, and an inorganic substance may be added to the paper. The paper may also be surface-treated to have an oxygen barrier coating or a water vapor barrier coating.

The substrate layer may be subjected to a surface treatment such as corona treatment, plasma treatment, ozone treatment, flame treatment, or anchor coat treatment. One of these surface treatments may be performed alone, or two or more surface treatments may be used in combination. In particular, when the substrate layer is subjected to corona treatment inline during the lamination process and the resin layer is then formed on the substrate layer, the adhesive strength between the P3HA resin (A) and the substrate layer can be enhanced.

### (Resin Layer)

The resin layer of the laminate is formed from the resin composition according to the present embodiment. The resin layer may contain a component other than the resin composition according to the present embodiment, to the extent that the component does not diminish the effect of the invention. The amount of such an additive can be set by those skilled in the art as appropriate depending on the intended purpose.

### (Method for Producing Laminate)

The laminate according to the present embodiment can be, but is not limited to being, produced by, for example, forming a P3HA resin-containing resin layer (lamination layer) on one side or both sides of a substrate layer such as paper by a lamination method.

The lamination method is a method for producing a laminate by pressure-bonding a P3HA resin-containing resin layer to a substrate layer using a pressure-bonding surface, and then separating the P3HA resin-containing resin layer from the pressure-bonding surface. The pressure-bonding surface may be any surface that can pressure-bond the P3HA resin-containing resin layer to the substrate layer, and examples include the surface of a plate-shaped object and the surface of a roll.

The lamination method is not limited to a particular technique. Specific examples include: extrusion coating in which the molten resin composition is extruded as a film through a T-die onto a separately fed substrate layer such as paper to directly laminate the substrate layer with the film, and the film is then cooled and pressure-bonded to the substrate layer by means of a cooling roll; and a method in which a film is prepared by melt extrusion molding using a T-die, and the film is then placed on and pressure-bonded to at least one side of a substrate layer (specific examples of this method include dry lamination, non-solvent lamination, and thermal lamination).

The heating temperature (hereinafter also referred to as the "lamination temperature") in the lamination method is preferably such that during the lamination, the temperature of the resin composition according to the present embodiment is equal to or higher than the melting point (Tm) of the P3HA resin (A) and equal to or lower than a temperature (Tm + 30) that is 30 °C above the melting point (Tm). The term "melting point" refers to the top temperature of a melting point peak that appears in a higher temperature range than the other melting point peaks on a crystalline melting curve obtained by differential scanning calorimetry.

If the lamination temperature is lower than the melting point, the resin cannot be made to flow sufficiently, and the thickness of the resulting resin film or layer tends to be significantly uneven. If the lamination temperature is higher than the temperature 30 °C above the melting point, the resin film, or the resin layer formed by lamination, solidifies slowly, with the result that separability of the film or layer from the cooling roll tends to be insufficient.

Specifically, the lamination temperature is preferably 160 °C or higher and more preferably 165 °C or higher. The lamination temperature is preferably up to 180 °C. When the lamination temperature is 180 °C or lower, a reduction in mechanical strength of the resin film or layer due to thermal decomposition of the P3HA resin (A) is likely to be avoided.

To control the lamination temperature, the device temperature may be set such that the temperature of the P3HA resin-containing resin composition falls within the above-described range during lamination. For example, in the case of extrusion coating, the temperature of the T-die may be adjusted. In the case of thermal lamination, the temperature of a device such as a heating roll for film bonding may be adjusted.

In the lamination method, the surface temperature of the cooling roll with which the molten resin composition extruded through the T-die comes into contact immediately after extrusion may be any temperature that allows formation of the resin film or cooling and pressure-bonding of the resin layer. The surface temperature is preferably from 55 to 65 °C and more preferably from 57 to 62 °C. When the surface temperature falls within such a range, crystallization of the P3HA resin (A) is accelerated. As a result, sticking of the resin film or layer to the cooling roll is reduced, and solidification can be completed in a short time.

A metal roll is suitable for use as the cooling roll. In order to avoid blocking with the resin film or layer, the surface of the cooling roll may be subjected to blasting treatment or release coating treatment. Examples of the release coating treatment include coating with a fluorine coat, coating with a ceramic coat, and coating with a Tosical (registered trademark of Tosico Corporation) coat.

The thickness of the film according to the present embodiment, or the thickness of the resin layer of the laminate according to the present embodiment, is not limited to a particular range. In order to prevent water absorption into the substrate layer and at the same time ensure sufficient flexibility, the thickness of the film or resin layer is preferably from 5 to 300 µm and more preferably from 10 to 200 µm.

When cup paper having a grammage of 150 to 350 g/m² is used as the substrate layer, the thickness of the resin layer is preferably from 20 to 100 µm and more preferably from 30 to 70 µm. Controlling the thickness within such a range can ensure good secondary processing properties such as high punchability and high heat sealability.

### [Molded Article]

A molded article according to the present embodiment includes the laminate described above. The molded article is useful for various applications since it is formed from the laminate whose resin layer has a good surface condition.

The molded article is not limited to a particular product and may be any product including the laminate. Examples of the molded article include paper, a film, a sheet, a tube, a plate, a rod, a container (e.g., a bottle), a bag, and a part. In terms of addressing marine pollution, the molded article is preferably a bag or a bottle.

The molded article may be the laminate itself, or may be an article produced through secondary processing of the laminate.

The molded article including the laminate subjected to secondary processing is suitable for use as any of various packaging materials or containers such as shopping bags, various other kinds of bags, packaging materials for foods or confectionery products, cups, trays, and cartons. That is, the molded article is suitable for use in diverse fields such as food industry, cosmetic industry, electronic industry, medical industry, and pharmaceutical industry. Since the laminate contains the resin composition having high adhesion to the substrate and good heat resistance, the molded article is more preferably used as a container for a hot substance. Examples of such containers include: liquid containers such as, in particular, cups for foods or beverages such as instant noodles, instant soups, and coffee; and trays used for prepared foods, boxed meals, or microwavable foods.

The secondary processing can be performed using any technique known in the art. For example, the secondary processing can be performed using a device such as a bag-making machine or form-fill-seal machine. Alternatively, the secondary processing may be performed using a device such as a paper tray press molding machine, a paper cup molding machine, a punching machine, or a case former. In any of these processing machines, any known bonding technique can be used to obtain the molded article. An example of the bonding technique is ordinary heat sealing. Other examples include impulse sealing, ultrasonic sealing, high-frequency sealing, hot air sealing, and flame sealing. The heat sealing may be performed between the substrate layer and the resin layer or between different portions of the resin layer.

The heat sealing temperature at which different portions of the resin layer of the laminate are heat-sealed is typically from 150 to 200 °C, preferably from 160 to 190 °C, and more preferably from 170 to 180 °C when the heat sealing is performed using a heat sealing tester equipped with a sealing bar while heating the laminate from both sides. The heat sealing temperature at which the resin layer and the substrate layer of the laminate are heat-sealed is typically from 160 to 220 °C, preferably from 170 to 210 °C, and more preferably from 180 to 200 °C when the heat sealing is performed using a heat sealing tester equipped with a sealing bar while heating the laminate from both sides. When the heat sealing temperature falls within such a range as mentioned above, melting and leakage of the resin in the vicinity of the sealed portion can be avoided, and a suitable thickness of the resin layer and sufficient seal strength can be achieved.

The heat sealing pressure at which the laminate is heat-sealed depends on the bonding technique used. In the case of using a heat sealing tester equipped with a sealing bar, the heat sealing pressure at which heat sealing is performed to obtain the molded article is typically 0.1 MPa or more and preferably 0.3 MPa or more. When the heat sealing pressure is equal to or higher than such a value, sufficient bond strength can be achieved by the heat sealing.

For the purpose of physical property improvement, the molded article according to the present embodiment may be combined with another molded article (such as a fiber, a yarn, a rope, a woven fabric, a knit, a non-woven fabric, paper, a film, a sheet, a tube, a plate, a rod, a container, a bag, a part, or a foam) made of a material different from that of the molded article of the present embodiment. The material of the other molded article is also preferably biodegradable.

The film, laminate, or molded article according to the present embodiment is suitable for use in various fields such as agricultural industry, fishery industry, forestry industry, horticultural industry, medical industry, hygiene industry, apparel industry, non-apparel industry, packaging industry, automotive industry, building material industry, and other industries.

In the following items, preferred aspects of the present disclosure are listed. The present invention is not limited to the following items.

### [Item 1]

A resin composition for T-die extrusion molding, containing:
100 parts by weight of a poly(3-hydroxyalkanoate) resin (A);
0.3 to 3 parts by weight of a layered clay mineral (B) having a mean particle diameter D50, as determined by laser diffractometry, of 1 to 5 µm and a specific surface area, as determined by BET method, of 10 to 40 m²/g; and
0.3 to 3 parts by weight of a fatty acid amide compound (C), wherein
the resin composition has a melt viscosity, as measured at a temperature of 175 °C and a shear rate of 122 s⁻¹, of 300 to 1000 Pa·s.

### [Item 2]

The resin composition for T-die extrusion molding according to item 1, wherein the poly(3-hydroxyalkanoate) resin (A) contains 50 wt% or more of a copolymer that contains 3-hydroxybutyrate units and other hydroxyalkanoate units and in which a proportion of the other hydroxyalkanoate units is from 1 to 10 mol%.

### [Item 3]

The resin composition for T-die extrusion molding according to item 1 or 2, wherein the poly(3-hydroxyalkanoate) resin (A) contains a copolymer that contains 3-hydroxybutyrate units and other hydroxyalkanoate units and in which a proportion of the other hydroxyalkanoate units is 24 mol% or more.

### [Item 4]

The resin composition for T-die extrusion molding according to item 2 or 3, wherein the other hydroxyalkanoate units are 3-hydroxyhexanoate units.

### [Item 5]

The resin composition for T-die extrusion molding according to any one of items 1 to 4, wherein the poly(3-hydroxyalkanoate) resin (A) has a weight-average molecular weight of 25 × 10⁴ to 50 × 10⁴.

### [Item 6]

The resin composition for T-die extrusion molding according to any one of items 1 to 5, being substantially free of pentaerythritol.

### [Item 7]

A T-die extrusion-molded film containing the resin composition for T-die extrusion molding according to any one of items 1 to 6.

### [Item 8]

A laminate including:
a T-die extrusion-molded resin layer containing the resin composition for T-die extrusion molding according to any one of items 1 to 6; and
a substrate layer.

### [Item 9]

The laminate according to item 8, wherein the substrate layer is biodegradable.

### [Item 10]

The laminate according to item 8 or 9, wherein the substrate layer is paper.

### [Item 11]

A molded article including the laminate according to any one of items 8 to 10.

### [Item 12]

A method for producing a film, the method including the step of subjecting the resin composition for T-die extrusion molding according to any one of items 1 to 6 to melt extrusion molding using a T-die.

### [Item 13]

A method for producing the laminate according to any one of items 8 to 10, the method including the step of forming the resin layer on at least one side of the substrate layer by extrusion coating using a T-die.

### [Item 14]

A method for producing the laminate according to any one of items 8 to 10, the method including the steps of:
molding the resin composition for T-die extrusion molding into a film by subjecting the resin composition to melt extrusion molding using a T-die; and
placing the film on at least one side of the substrate layer and forming the film into the resin layer by dry lamination, non-solvent lamination, or thermal lamination.

### [Item 15]

The method according to item 13 or 14, wherein
a heating temperature during extrusion is equal to or higher than a melting point (Tm) of the poly(3-hydroxyalkanoate) resin (A) and equal to or lower than a temperature 30 °C above the melting point (Tm), and
a temperature of a cooling roll is from 55 to 65 °C.

### Examples

Hereinafter, the present invention will be described in more detail based on examples. The present invention is not limited to these examples.

Materials used to prepare resin compositions for T-die extrusion molding in Examples and Comparative Examples are listed below.

### [Poly(3-Hydroxyalkanoate) Resins]

P3HB3HH-1 to P3HB3HH-3 listed below were produced according to the methods described in Production Examples 3 and 4 of WO 2019/239913 A1.
P3HB3HH-1: P3HB3HH (average 3HB/3HH ratio = 94/6 (mol%/mol%), weight-average molecular weight = 40 × 10⁴ g/mol)
P3HB3HH-2: P3HB3HH (average 3HB/3HH ratio = 94/6 (mol%/mol%), weight-average molecular weight = 60 × 10⁴ g/mol)
P3HB3HH-3: P3HB3HH (average 3HB/3HH ratio = 94/6 (mol%/mol%), weight-average molecular weight = 20 × 10⁴ g/mol)
P3HB3HH-4: P3HB3HH (average 3HB/3HH ratio = 72/28 (mol%/mol%), weight-average molecular weight = 60 × 10⁴ g/mol)

This resin was produced according to the method described in Example 9 of WO 2019/142845 A1.

### [Layered Clay Minerals]

Talc 1: MICRO ACE SG-200N15, manufactured by Nippon Talc Co., Ltd. (mean particle diameter D50 = 1.5 µm, specific surface area = 35 m²/g)
Talc 2: MICRO ACE SG-95, manufactured by Nippon Talc Co., Ltd. (mean particle diameter D50 = 2.1 µm, specific surface area = 15 m²/g)
Talc 3: MICRO ACE K-1, manufactured by Nippon Talc Co., Ltd. (mean particle diameter D50 = 8.0 µm, specific surface area = 7 m²/g)

The mean particle diameters D50 of the layered clay minerals are values measured as median diameters (D50) using a laser diffraction/scattering particle size distribution analyzer ("Microtrac MT3100II" manufactured by Nikkiso Co., Ltd.).

### [Aliphatic Amide Compound]

Behenamide: BNT-22H, manufactured by Nippon Fine Chemical Co., Ltd.

Evaluation procedures performed in Examples and Comparative Examples will now be described.

### [How to Measure Melt Viscosity]

Capilograph^{™} (cylinder diameter = 10 mm) equipped with an orifice having an opening diameter of 1 mm, a length of 10 mm, and an entrance angle of 90° was heated to 175 °C and charged with 15 g of resin pellets. After preheating for 5 minutes, the piston was lowered at a speed of 10 mm/min. The melt viscosity at a shear rate of 122/s was calculated from the stress exerted on the piston during extrusion of the molten resin through the orifice.

### [Separability from Cooling Roll]

The degree to which the resin film extruded through the T-die stuck to the cooling roll was examined. The rating criteria were as follows.

### <Ratings>

Excellent: The resin film can be pulled continuously and smoothly without any tension applied during separation from the cooling roll.
Good: The resin film can be pulled continuously and smoothly, although a slight tension is applied to the resin film during separation from the cooling roll.
Average: The resin film can be separated continuously from the cooling roll but becomes wrinkled.
Poor: Resin crystallization is insufficient, so that molding is impossible.

### [Neck-In]

The width of the film obtained was measured at intervals of 50 mm in the machine direction. The amount of neck-in was determined based on the average of the measured width values (Amount of neck-in = (T-die opening width - average film width) × 1/2) and evaluated according to the following criteria.

### <Ratings>

Good: Less than 80 mm
Poor: 80 mm or more

### (Example 1)

One hundred parts by weight of P3HB3HH-1 was dry-blended (the resin component was in a non-molten state) with other components, the proportions of which were as shown in Table 1 (the proportions are shown as parts by weight in the table). The resulting blend was then melted, kneaded, and extruded into a strand using a twin-screw extruder whose cylinder and die were set to 150 °C. The strand was crystallized and solidified by immersion in a water bath heated to 40 °C. The strand was then cut using a pelletizer to prepare resin pellets for T-die extrusion molding. The measurement result of the melt viscosity of the obtained resin pellets is shown in Table 1.

Subsequently, the obtained resin pellets were thoroughly dried at 60 °C and then introduced into a single-screw extruder equipped with a T-die having an opening width of 500 mm and a lip clearance of 0.7 mm. The resin material was extruded through the T-die and pressed between a metal roll (roll diameter = 150 mm) and a rubber roll (roll diameter = 150 mm) while being pulled at a speed of 5 m/min, thereby being molded into a film having a thickness of 40 µm. In this process, separability from the cooling roll and the amount of neck-in were evaluated. The cylinder and the die of the extruder were set to 170 °C, the cooling roll was set to 60 °C, and the air gap (the distance from the die outlet to the point at which the molten resin layer contacts the cooling roll) was set to 90 mm. The results are shown in Table 1.

### (Examples 2 to 4 and Comparative Examples 1 to 5)

Resin pellets were prepared and subjected to evaluations in the same manner as in Example 1, except that the resin formulation was changed as shown in Table 1. The results are summarized in Table 1.

**[Table 1]**

| | | | Examples | | | | Comparative Examples | | | | |
|---|---|---|---|---|---|---|---|---|---|---|---|
| | | | | 2 | 3 | 4 | 1 | 2 | 3 | 4 | 5 |
| Resin formulation | P3HA resin (A) | P3HB3HH-1 | 100 | 100 | 70 | 70 | 100 | 100 | 100 | | |
| | | P3HB3HH-2 | | | | | | | | 100 | |
| | | P3HB3HH-3 | | | | | | | | | 100 |
| | | P3HB3HH-4 | | | 30 | 30 | | | | | |
| | Layered clay mineral (B) | Talc 1 | 1 | | 1 | | | 5 | | 1 | 1 |
| | | Talc 2 | | 1 | | 1 | | | | | |
| | | Talc 3 | | | | | | | 1 | | |
| | Aliphatic amide compound (C) | Behenamide | 1 | 1 | 1 | 1 | 1 | 1 | 1 | 1 | 1 |
| Melt viscosity of resin composition 175 °C, 122 sec⁻¹) | | Pa·s | 650 | 680 | 820 | 820 | 670 | 490 | 700 | 1060 | 290 |
| Ratings | T-die extrusion moldability | Separability from cooling roll | Excellent | Excellentl | | Excellent | Good | Average | Average | Average | Poor |
| | | Neck-in | Good | Good | Good | Good | Poor | Good | Good | Good | Poor |

### [Results]

Table 1 shows that Examples 1 to 4 exhibited good results in the evaluation of separability from the cooling roll and the amount of neck-in.

In contrast, Comparative Example 1, in which the layered clay mineral (B) was not incorporated, was rated poor in terms of neck-in. In Comparative Example 2, in which the amount of the layered clay mineral (B) was increased to 5 parts by weight, separability from the cooling roll was poor. In Comparative Example 3, in which the layered clay mineral (B) used had a mean particle diameter D50 as large as 8.0 µm, separability from the cooling roll was poor. In Comparative Example 4, in which a resin composition having a melt viscosity as high as 1060 Pa·s under the given conditions was used, separability from the cooling roll was poor. Comparative Example 5, in which a resin composition having a melt viscosity as low as 290 Pa·s under the given conditions was used, was rated poor both in terms of separability from the cooling roll and in terms of neck-in.

## Claims

1. A resin composition for T-die extrusion molding, comprising:
100 parts by weight of a poly(3-hydroxyalkanoate) resin (A);
0.3 to 3 parts by weight of a layered clay mineral (B) having a mean particle diameter D50, as determined by laser diffractometry, of 1 to 5 µm and a specific surface area, as determined by BET method, of 10 to 40 m²/g; and
0.3 to 3 parts by weight of a fatty acid amide compound (C), wherein
the resin composition has a melt viscosity, as measured at a temperature of 175 °C and a shear rate of 122 s⁻¹, of 300 to 1000 Pa·s.

2. The resin composition for T-die extrusion molding according to claim 1, wherein the poly(3-hydroxyalkanoate) resin (A) comprises 50 wt% or more of a copolymer that contains 3-hydroxybutyrate units and other hydroxyalkanoate units and in which a proportion of the other hydroxyalkanoate units is from 1 to 10 mol%.

3. The resin composition for T-die extrusion molding according to claim 2, wherein the poly(3-hydroxyalkanoate) resin (A) comprises a copolymer that contains 3-hydroxybutyrate units and other hydroxyalkanoate units and in which a proportion of the other hydroxyalkanoate units is 24 mol% or more.

4. The resin composition for T-die extrusion molding according to claim 2, wherein the other hydroxyalkanoate units are 3-hydroxyhexanoate units.

5. The resin composition for T-die extrusion molding according to any one of claims 1 to 4, wherein the poly(3-hydroxyalkanoate) resin (A) has a weight-average molecular weight of 25 × 10⁴ to 50 × 10⁴.

6. The resin composition for T-die extrusion molding according to any one of claims 1 to 4, being substantially free of pentaerythritol.

7. A T-die extrusion-molded film comprising the resin composition for T-die extrusion molding according to claim 1.

8. A laminate comprising:
a T-die extrusion-molded resin layer comprising the resin composition for T-die extrusion molding according to claim 1; and
a substrate layer.

9. The laminate according to claim 8, wherein the substrate layer is biodegradable.

10. The laminate according to claim 8, wherein the substrate layer is paper.

11. A molded article comprising the laminate according to claim 8.

12. A method for producing a film, the method comprising the step of subjecting the resin composition for T-die extrusion molding according to claim 1 to melt extrusion molding using a T-die.

13. A method for producing the laminate according to claim 8, the method comprising the step of forming the resin layer on at least one side of the substrate layer by extrusion coating using a T-die.

14. A method for producing the laminate according to claim 8, the method comprising the steps of:
molding the resin composition for T-die extrusion molding into a film by subjecting the resin composition to melt extrusion molding using a T-die; and
placing the film on at least one side of the substrate layer and forming the film into the resin layer by dry lamination, non-solvent lamination, or thermal lamination.

15. The method according to claim 13 or 14, wherein
a heating temperature during extrusion is equal to or higher than a melting point (Tm) of the poly(3-hydroxyalkanoate) resin (A) and equal to or lower than a temperature 30 °C above the melting point (Tm), and
a temperature of a cooling roll is from 55 to 65 °C.
